# FASCICULE DE BREVET EUROPEEN

(11) **EP 0 380 425 B1**
(45) Date de publication et mention de la délivrance du brevet: **12.04.1995**
(21) Numéro de dépôt: 90400225.0
(22) Date de dépôt: 25.01.1990
(51) Int. Cl.: B60C 23/06, G01L 17/00

(54) **Procédé et dispositif de diagnostic de l'état de gonflage des pneumatiques d'un véhicule automobile**
Verfahren und Vorrichtung zur Überwachung des Luftdruckes in Fahrzeugreifen
Method and device for diagnosing the inflation condition of motor vehicle tyres

(30) Priorité: 25.01.1989 FR 8900902
(43) Date de publication de la demande: 01.08.1990
(73) Titulaire: Union de Syndicats dite: UNION TECHNIQUE DE L'AUTOMOBILE, DU MOTOCYCLE ET DU CYCLE -U.T.A.C.-, F-75015 Paris (FR)
(72) Inventeur: Lucquiaud, Roland, F-91000 Evry (FR); Beaussier, Philippe, F-75005 Paris (FR); Sudre, Frédéric, F-91290 Arpajon (FR)
(74) Mandataire: Bruder, Michel

(56) Documents cités:
- BE-A- 527 882
- US-A- 3 869 908
- US-A- 4 102 184

## Description

La présente invention concerne un procédé et un dispositif de diagnostic de l'état de gonflage des pneumatiques d'un véhicule automobile.

Il est bien connu que pour qu'un véhicule automobile puisse être conduit en toute sécurité, les pneumatiques doivent être gonflés à une pression nominale fixée par les constructeurs. Si les pneumatiques sont sous-gonflés, la conduite, notamment à grande vitesse sur autoroute, se traduit par un échauffement des pneumatiques, échauffement qui peut conduire à son tour à un éclatement des pneumatiques avec les conséquences dramatiques qui en résultent souvent. Pour cette raison il est conseillé de rappeler constamment aux conducteurs de véhicules automobiles de surveiller périodiquement la pression de gonflage des pneumatiques. Toutefois cette opération exige un contrôle de l'état de pression de chaque pneumatique au moyen d'un manomètre branché sur la valve du pneumatique et cette opération peu commode est pour cette raison, souvent négligée par beaucoup de conducteurs. Il apparaît donc de la plus haute importance, pour augmenter la sécurité de la circulation routière, de pouvoir informer directement le conducteur d'un véhicule de l'état sous-gonflage de ses pneumatiques, sans que ce conducteur ait à intervenir de quelque manière que ce soit.

On a proposé dans le brevet US-A-4 102 184 un dispositif destiné à contrôler l'état de gonflement de pneumatiques. Ce dispositif comprend une sonde qui est mise au contact du pneumatique et qui est enfoncée sur une certaine profondeur vers l'intérieur de celui-ci, et des moyens aptes à détecter l'intensité de la force élastique opposés à la déformation du pneumatique, afin d'en déterminer la raideur.

Ces dispositifs, ou dispositifs de mesure statique, possédent notamment l'inconvénient de mesurer une raideur du pneumatique qui ne dépend pas exclusivement du gonflage de ces derniers mais qui dépend également des paramètres physiques du pneumatique et, notamment de son diamètre.

La présente invention se propose d'éviter cet inconvénient en proposant un procédé et un appareil de conception particulièrement simple permettant d'informer le conducteur, avec une grande précision, de l'état de sous-gonflage des pneumatiques de son véhicule, la mesure réalisée n'étant que peu liée aux paramètres constitutifs du pneumatique.

La présente invention a ainsi pour objet un procédé de diagnostic de l'état de gonflage des pneumatiques d'un véhicule automobile dans lequel on provoque une déformation locale de chaque pneumatique, par application à celui-ci d'un effort dirigé vers l'intérieur du pneumatique, et on mesure la raideur du ressort que constitue le pneumatique, pour en déduire l'état de gonflage de celui-ci caractérisé en ce qu'il comporte les étapes consistant à :
- appliquer au pneumatique un effort dynamique de très courte durée,
- mesurer la variation dans le temps, à l'aide d'un capteur de force, de l'effort résultant de la déformation locale du pneumatique,
- délivrer un signal électrique représentant cet effort,
- assurer le traitement des signaux électriques résultant des divers capteurs de force au moyen d'un microprocesseur,
- afficher un signal indiquant si un ou plusieurs pneumatiques se trouvent être sous-gonflés.

La présente invention a également pour objet un dispositif de diagnostic de l'état de gonflage des pneumatiques d'un véhicule automobile comprenant pour chaque pneumatique , un dispositif d'excitation de ce pneumatique comportant des moyens pour appliquer localement au pneumatique un effort provoquant une déformation de ce pneumatique caractérisé en ce que les moyens sont aptes à exercer sur le pneumatique un effort dynamique de courte durée, un capteur de force mesurant la variation, dans le temps, de l'effort résultant de la déformation locale du pneumatique et délivrant un signal électrique représentant cet effort, un microprocesseur assurant le traitement des signaux électriques résultant des divers capteurs de force, et un dispositif d'affichage émettant un signal indiquant si un ou plusieurs pneumatiques se trouvent être sous-gonflés.

En effet, la demanderesse a constaté qu'une détermination dynamique de l'état de gonflement du pneu était nettement moins perturbée par les paramètres physiques constititifs du pneumatique tel que par exemple le diamètre de celui-ci.

On décrira ci-après, à titre d'exemples non limitatifs, diverses formes d'exécution de la présente invention, en référence au dessin annexé sur lequel :

La figure 1 est une schéma synoptique illustrant le procédé de diagnostic de l'état de gonflage des pneumatiques d'un véhicule suivant l'invention.

La figure 2 est un schéma d'une forme d'exécution du dispositif d'excitation d'un pneumatique.

La figure 3 est un diagramme illustrant la variation de l'effort détecté en fonction du temps, dans le cas d'un même pneumatique respectivement normalement gonflé et sous-gonflé.

La figure 4 est un diagramme illustrant la variation de l'effort détecté en fonction du temps, dans le cas de deux pneumatiques gonflés à la même pression mais à raideurs radiales intrinsèques différentes.

La figure 5 est une vue en coupe axiale, à plus grande échelle, d'une fòrme d'exécution d'un bras percuteur constituant le dispositif d'excitation d'un pneumatique.

La figure 6 est une vue en plan schématique de l'ensemble d'un banc automatique de mesure simultanée de la pression des quatre pneumatiques d'un véhicule à l'arrêt.

La figure 7 est une vue en plan schématique d'un chariot mobile du banc automatique de la figure 6.

La figure 8 est une vue en élévation du dispositif de mise en position d'un bras percuteur par rapport à un pneumatique.

La figure 9 est une vue en plan du dispositif de mise en position d'un bras percuteur par rapport à un pneumatique.

Les figures 10,11,12,13 et 14 sont des vues en plan schématiques illustrant les diverses étapes de mise en place et d'escamotage du banc de mesure automatique suivant l'invention.

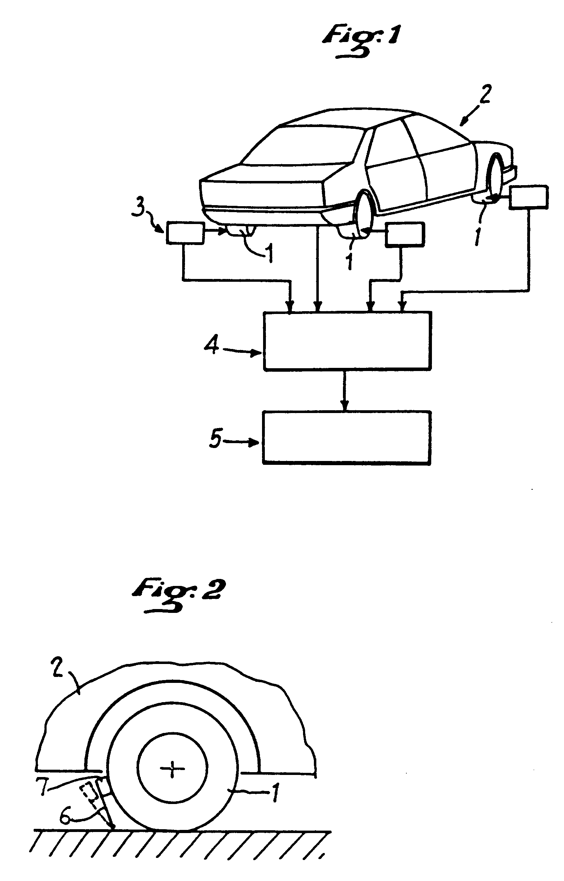

Comme on peut mieux le voir sur la figure 1, le procédé et l'appareil suivant l'invention sont destinés à diagnostiquer l'état de gonflage des pneumatiques 1 d'un véhicule 2 afin d'indiquer au conducteur du véhicule si l'un au moins de ses pneumatiques se trouve dans un état sous-gonflé. A cet effet à chaque pneumatique 1 est associé un dispositif d'excitation 3 comportant un capteur de force et qui exerce, en un point quelconque du pneumatique 1 auquel il est associé et vers l'intérieur de celui-ci, un effort entraînant une déformation locale de ce pneumatique, déformation qui dépend de son état de gonflage. Le dispositif d'excitation 3 comporte un capteur de force qui est soumis à l'effort, variable dans le temps, résultant de la déformation du pneumatique et qui traduit cet effort en un signal électrique. Les signaux électriques provenant des divers dispositifs d'excitation 3 à capteur de force sont transmis à un microprocesseur 4 qui assure le traitement de ces signaux. Ce microprocesseur est connecté à un dispositif d'affichage 5 qui indique au conducteur du véhicule, d'une manière visuelle et/ou sonore si l'un au moins des pneumatiques 1 se trouve dans un état sous-gonflé.

Le test de gonflage des pneumatiques 1 doit s'effectuer alors que le véhicule 2 est à l'arrêt. Ce test peut être ainsi réalisé à un poste d'entrée sur une autoroute où le conducteur est obligé de s'arrêter un certain temps pour prendre son ticket. Cette période d'arrêt est suffisante pour effectuer les tests de l'état de gonflage des pneumatiques du véhicule et pour indiquer au conducteur s'il doit ou non procéder au gonflage de certains de ses pneumatiques.

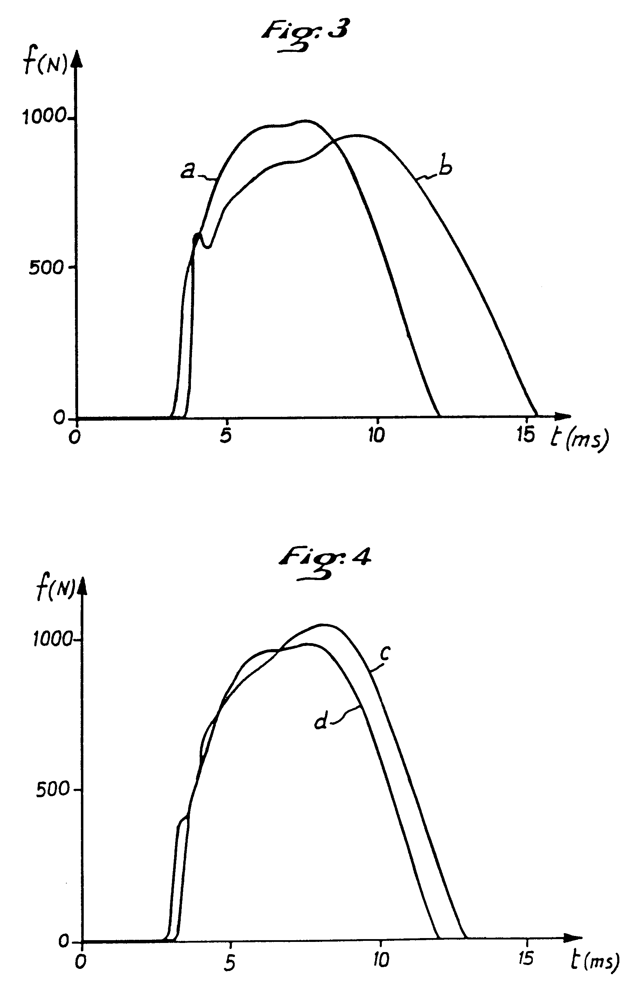

Si on se réfère à la figure 2, on voit que le dispositif d'excitation 3 comprend un marteau 6, équipé à son extrémité, d'un capteur de force 7. Ce marteau 6 est monté mobile sur un support approprié de manière à pouvoir venir frapper n'importe quel emplacement du pneumatique, de préférence sur sa bande de roulement. La déformation du pneumatique 1 qui résulte du choc se traduit par un effort exercé sur le capteur de force 7, effort dont l'intensité varie dans le temps. Les figures 3 et 4 sont des diagrammes illustrant la variation de la force f, en newtons, portée en ordonnée, en fonction du temps t, en millisecondes, porté en abscisse. Les courbes a et b de la figure 3 correspondent aux résultats de mesures effectuées avec le même pneumatique de marque Michelin du type MXV 195/55 R 13, respectivement gonflé à une pression normale de 2,5 bars et sous-gonflé à une pression de 1 bar. On voit que ces courbes a et b ont sensiblement une forme en cloche, l'intensité de l'effort allant en croissant jusqu'à un maximum puis décroissant progressivement. Les formes des courbes a et b dépendent de la raideur du ressort que constitue le pneumatique, cette raideur dépendant surtout de la pression interne du pneumatique et, à un degré moindre, du type de pneumatique testé. L'influence de la raideur intrinsèque du pneumatique est mise en évidence par les courbes de la figure 4. Les courbes c et d représentées sur la figure 4 correspondent aux résultats de mesures effectuées avec deux pneumatiques de types différents à savoir un pneumatique du type X M+S 1458 R 13 (courbe c) et un pneumatique du type MXV 195/55 R 13 (courbe d), ces deux pneumatiques étant gonflés à la même pression de 2,5 bars.

Les signaux fournis par les capteurs de force 7 permettant d'établir, après traitement statistique, un modèle d'estimation de la pression interne de chaque pneumatique. Ce modèle d'estimation doit contenir une relation entre des paramètres adimensionnels calculés à partir des signaux enregistrés et la pression interne du pneumatique. Des paramètres adimensionnels ou temporels peuvent être choisis parmi les suivants: durée du choc évaluée par le rapport entre l'énergie du choc et la valeur maximale de la force (sur une demi-sinusoïde dans le cas de la seconde forme d'exécution), coefficient d'asymétrie du signal mesuré sur une durée de l'ordre de 20ms, coefficient d'aplatissement, temps au bout duquel la valeur maximale est atteinte etc. Le résultat de cette forme d'estimation doit être indépendant des caractéristiques dimensionnelles du pneumatique, de la charge supportée par la roue, de l'usure du pneumatique etc. Le résultat doit être aussi indépendant de l'étalonnage du capteur de force, ce qui supprime ultérieurement la calibration de la chaîne de mesure. Ce modèle permet d'estimer la pression avec un degré de confiance qui doit être déterminé. Après avoir fixé un seuil critique de dégonflement, on peut alors être en mesure d'évaluer le risque encouru par l'automobiliste pendant le roulage à vitesse élevée. Ce risque est signalé par le dispositif d'affichage 5 qui émet un message visuel et/ou sonore à l'attention du conducteur.

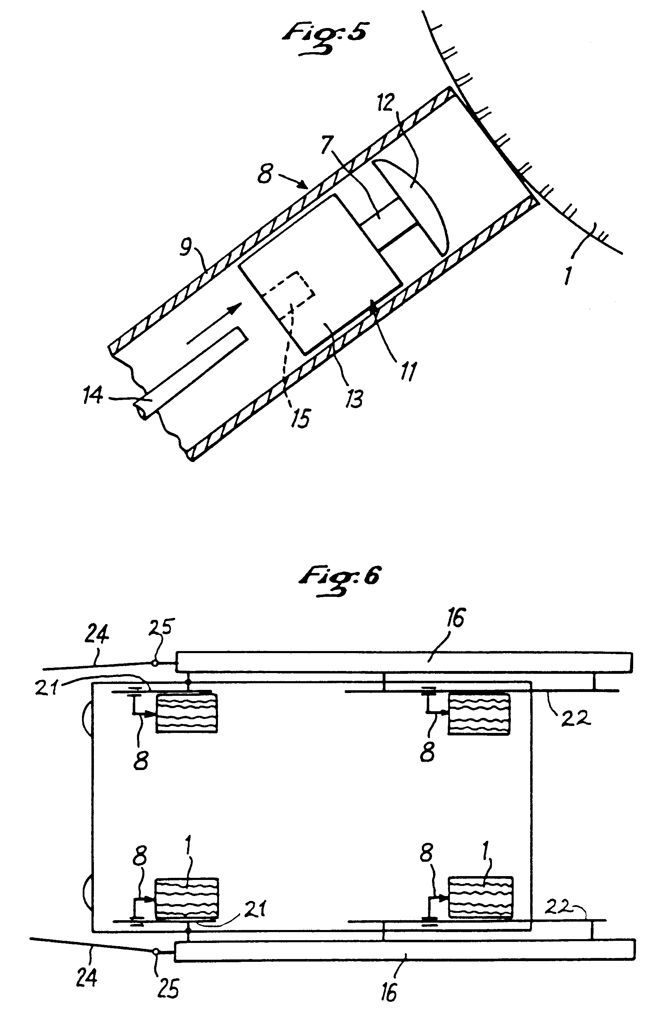

La figure 5 représente une forme d'exécution d'un bras percuteur 8 pouvant être utilisé dans le dispositif de diagnostic suivant l'invention. Ce bras percuteur 8 comprend un canon cylindrique 9 qui est fixé à 1 l'extrémité d'un bras réglable en hauteur, non représenté, de manière à pouvoir être disposé radialement à proximité immédiate de la bande de roulement d'un pneumatique 1. Le canon 9 contient un ensemble mobile 11 comprenant un embout en matière plastique 12, par exemple en "Téflon", destiné à venir frapper la bande de roulement du pneumatique 1, un capteur de force 7 et une masse additionnelle 13 constituée par un bloc d'acier. Cet ensemble mobile 11 est propulsé vers la bande de roulement du pneumatique 1 par la tige 14 d'un vérin pneumatique raccordé au canon 8. De préférence la masse additionnelle 13 présente une face frontale tournée vers la tige de vérin 14 qui est évidée en 154 de manière que l'extrémité de la tige de vérin 14 puisse venir s'y loger. Pour la réalisation d'une mesure, le canon 8 est appliqué sans effort contre la bande de roulement du pneumatique 1 et l'ensemble mobile 11 qui est libre dans le canon 9, est projeté contre la bande de roulement par la tige 14 du vérin à action rapide. La masse additionnelle 13 doit être suffisante pour pouvoir obtenir l'énergie du choc désirée et l'évidement 15 est choisi d'une profondeur suffisante pour qu'en bout de course de la tige 14 du vérin, le délai entre le premier choc et les chocs parasites ultérieurs, dus aux rebonds, soit suffisant.

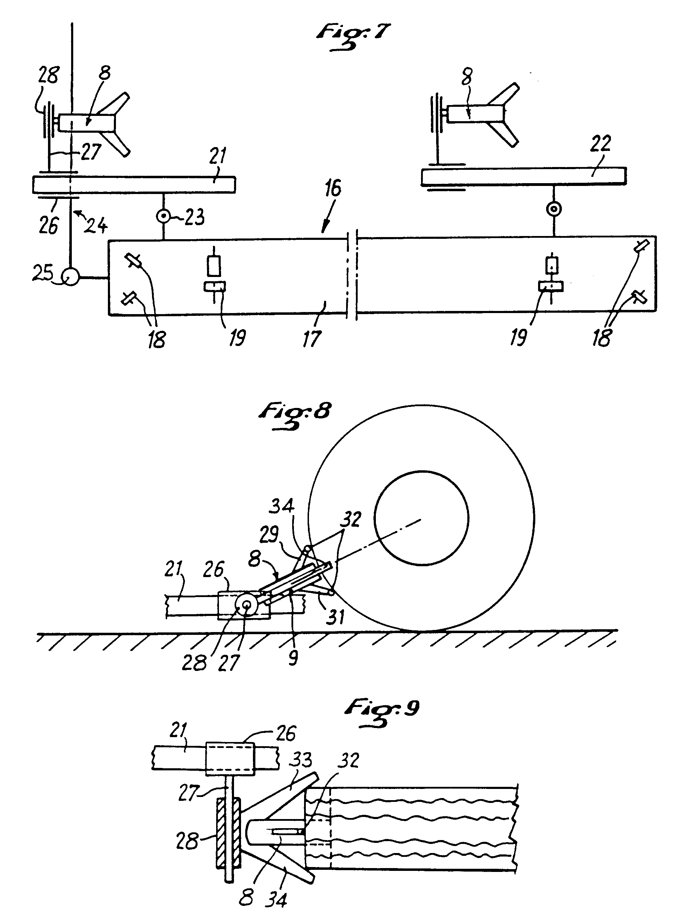

On décrira maintenant, en se référant aux figures 6 à 9, une forme d'exécution d'un banc automatique de mesure simultanée sur les quatre roues d'un véhicule à l'arrêt. Ce banc de mesure comprend quatre bras percuteurs 8 répartis par paires sur deux chariots escamotables 16 qui sont posés au sol de part et d'autre du véhicule dont les pneumatiques doivent être contrôlés. Une telle disposition permet d'éviter tous travaux de génie civil sur le lieu de contrôle et également d'escamoter les chariots 16 dans des logements latéraux pour les protéger lorsqu'il n'y a pas de véhicule à contrôler. Chaque chariot 16 comprend un longeron 17 reposant sur le sol par des roues folles 18 et pouvant être déplacé par des roues de motorisation orientables 19. Chaque chariot 16 porte d'un même côté, à l'avant et à l'arrière, deux règles longitudinales de positionnement latéral à savoir une règle avant 21 et une règle arrière 22 qui sont situées à environ 120 millimètres du sol et qui sont destinées à venir prendre appui sur les flancs des pneumatiques 1. La règle de positionnement latéral avant 21 peut être avantageusement articulée sur le chariot 16 autour d'un axe vertical 23 afin d'être ainsi auto-orientable et de pouvoir s'appliquer contre une roue avant braquée. Chaque chariot 16 porte également à l'avant un bras de crochetage escamotable 24 qui est articulé autour d'un axe vertical 25. Chacune des règles longitudinales de positionnement latéral avant 21 et arrière 22 porte un manchon 26 monté à coulissement longitudinal et solidaire d'un bras horizontal et transversal 27. Sur ce bras 27 est monté à coulissement un manchon 28 dont est solidaire le bras percuteur 8. Le canon 9 de ce bras percuteur 8 est articulé sur le bras horizontal et transversal 27 par l'intermédiaire du manchon 28 et ce canon 9 est solidaire de deux bras supérieur 29 et inférieur 31 contenus dans un même plan vertical et formant un V ouvert en direction du pneumatique. Les deux bras 29, 31 en V portent à leurs extrémités des roulettes 32 destinées à venir en contact avec la bande de roulement du pneumatique 1. Par ailleurs le canon 9 du bras percuteur 8 est également solidaire de deux autres bras 33,34 formant un V ouvert en direction du pneumatique contenu dans un plan passant par l'axe du canon 9 et perpendiculaire au plan vertical et pouvant venir coiffer la bande de roulement de ce pneumatique pour assurer le centrage latéral.

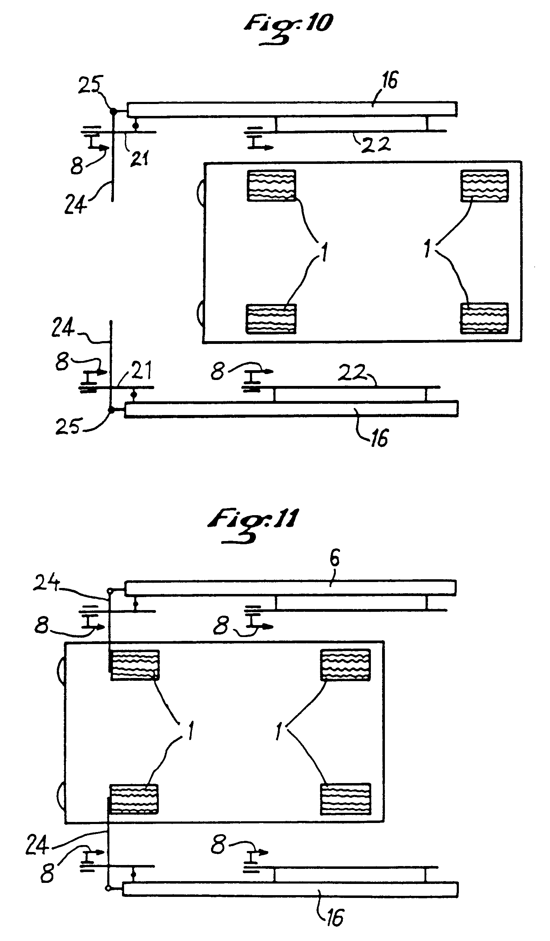

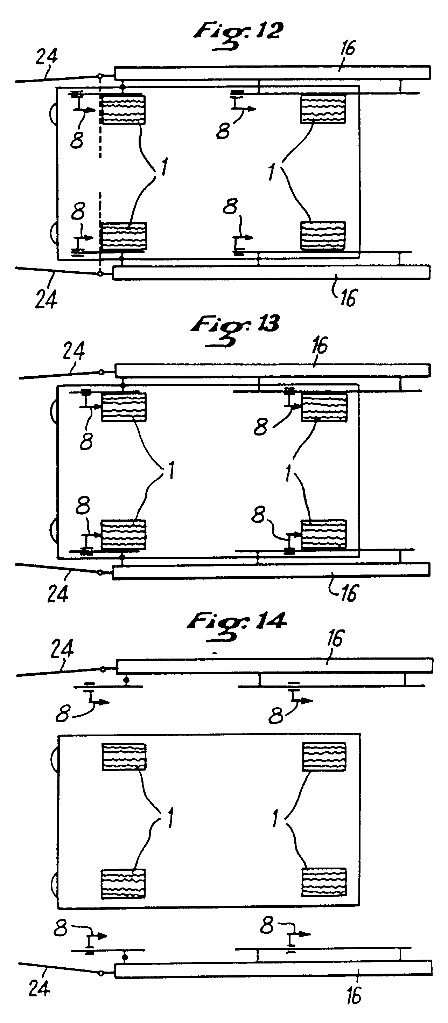

Les figures 10 à 14 illustrant les diverses étapes de l'opération de mesure de l'état de gonflage des quatre pneumatiques 1 d'un véhicule à l'arrêt, par exemple à l'endroit d'un poste de péage d'une autoroute. Initialement les deux chariots 16 sont situés un peu en amont du poste de péage et écartés d'une valeur suffisante pour pouvoir accepter entre eux tous les véhicules. Les bras de crochetage escamotables 24 s'étendent transversalement l'un en direction de l'autre de manière à pouvoir entraîner les chariots mobiles 16 vers l'avant pendant la phase d'approche du véhicule. A un certain moment, comme il est représenté sur la figure 11, le véhicule arrivant vient en contact par les pneumatiques 1 de ses deux roues avant avec les bras de crochetage 24 et il entraîne alors les chariots jusqu'à la hauteur du poste de péage où il s'arrête. On commande alors le rapprochement latéral des deux chariots 16 du véhicule jusqu'à ce que les règles de positionnement latéral avant 21 et arrière 22 viennent se plaquer contre les flancs des pneumatiques. Durant ce mouvement, les bras de crochetage 24 sont repoussés vers l'extérieur et tendent à se placer à l'alignement des longerons 17 des chariots 16.

On déplace ensuite les quatre bras percuteurs 8 de manière à les amener en contact avec les bandes de roulement des pneumatiques 1 respectifs comme il est représenté sur la figure 13. On effectue ensuite la mesure, après quoi on escamote latéralement les deux chariots 16 et on les ramène en position initiale comme il est représenté sur la figure 14.

## Revendications

1. Procédé de diagnostic de l'état de gonflage des pneumatiques d'un véhicule automobile dans lequel on provoque une déformation locale de chaque pneumatique, par application à celui-ci d'un effort dirigé vers l'intérieur du pneumatique, et on mesure la raideur du ressort que constitue le pneumatique, pour en déduire l'état de gonflage de celui-ci caractérisé en ce qu'il comporte les étapes consistant à :
- appliquer au pneumatique un effort dynamique de très courte durée,
- mesurer la variation dans le temps, à l'aide d'un capteur de force, de l'effort résultant de la déformation locale du pneumatique,
- délivrer un signal électrique représentant cet effort,
- assurer le traitement des signaux électriques résultant des divers capteurs de force au moyen d'un microprocesseur,
- afficher un signal indiquant si un ou plusieurs pneumatiques se trouvent être sous-gonflés.

2. Dispositif de diagnostic de l'état de gonflage des pneumatiques d'un véhicule automobile comprenant pour chaque pneumatique (1), un dispositif (3) d'excitation de ce pneumatique (1) comportant des moyens (6,8) pour appliquer localement au pneumatique un effort provoquant une déformation de ce pneumatique, caractérisé en ce que les moyens (6,8) sont aptes à exercer sur le pneumatique (1) un effort dynamique de courte durée, un capteur de force (7) mesurant la variation, dans le temps, de l'effort résultant de la déformation locale du pneumatique (1) et délivrant un signal électrique représentant cet effort, un microprocesseur (4) assurant le traitement des signaux électriques résultant des divers capteurs de force, et un dispositif d'affichage (5) émettant un signal indiquant si un ou plusieurs pneumatiques se trouvent être sous-gonflés.

3. Dispositif suivant la revendication 2 caractérisé en ce que le dispositif d'excitation (3) comprend un marteau (6) équipé, à son extrémité, d'un capteur de force (7), ce marteau (6) étant mobile sur un support approprié de manière à pouvoir venir frapper n'importe quel emplacement du pneumatique sur sa bande de roulement ou son flanc.

4. Dispositif suivant la revendication 2 caractérisé en ce que le dispositif d'excitation du pneumatique (1) est constitué par un bras percuteur (8) comprenant un canon cylindrique (9) qui est fixé à l'extrémité d'un bras réglable en hauteur, de manière à pouvoir être disposé radialement à proximité immédiate de la bande de roulement d'un pneumatique (1), le canon (9) contenant un ensemble mobile (11) comprenant un embout en matière plastique (12), destiné à venir frapper la bande de roulement du pneumatique (1), un capteur de force (7) et une masse additionnelle (13), constituée par un bloc d'acier et cet ensemble mobile (11) est propulsé vers la bande de roulement du pneumatique (1) par la tige (14) d'un vérin pneumatique raccordé au canon (8).

5. Dispositif suivant l'une quelconque des revendications 2 à 4 caractérisé en ce qu'il constitue un banc automatique de mesure simultanée sur les quatre roues d'un véhicule à l'arrêt, ce banc de mesure comprenant quatre bras percuteurs (8), répartis par paires sur deux chariots escamotables (16), qui sont posés au sol de part et d'autre du véhicule dont les pneumatiques doivent être contrôlés.

6. Dispositif suivant la revendication 5 caractérisé en ce que chaque chariot (16) comprend un longeron (17) reposant sur le sol par des roues folles (18) et pouvant être déplacé par des roues de motorisation orientables (19), il porte d'un même côté, à l'avant et à l'arrière deux règles longitudinales de positionnement latéral, à savoir une règle avant (21) et une règle arrière (22) qui sont destinées à venir prendre appui sur les flancs des pneumatiques (1), chacune des règles de positionnement latéral (21,22) portant un bras percuteur (8).

7. Dispositif suivant la revendication 6 caractérisé en ce que la règle de positionnement latéral avant (21) est articulée sur le chariot (16), autour d'un axe vertical (23).

8. Dispositif suivant l'une quelconque des revendications 6 et 7 caractérisé en ce que chaque chariot (16) porte, à l'avant, un bras de crochetage escamotable (24), qui est articulé autour d'un axe vertical (25).

9. Dispositif suivant l'une quelconque des revendications 6 et 8 caractérisé en ce que chacune des règles longitudinales de positionnement latéral avant (21) et arrière (22) porte un manchon (26), monté à coulissement longitudinal et solidaire d'un bras horizontal et transversal (27), sur ce bras (27) est monté, à coulissement, un manchon (28) dont est solidaire le bras percuteur (8), le canon (9) de ce bras percuteur (8) étant articulé sur le bras horizontal et transversal (27) par l'intermédiaire du manchon (28).

10. Dispositif suivant l'une quelconque des revendications 6 à 9 caractérisé en ce que le canon (9) de chaque bras percuteur (8) est solidaire de deux bras supérieur (29) et inférieur (31) contenus dans un même plan vertical et formant un (V) ouvert en direction du pneumatique, les deux bras (29,31) en V portant à leurs extrémités des roulettes (32) destinées à venir en contact avec la bande de roulement du pneumatique (1), et le canon (9) du bras percuteur (8) est également solidaire de deux autres bras (33,34) formant un V ouvert en direction du pneumatique, contenu dans un plan passant par l'axe du canon (9) et perpendiculaire au plan vertical et pouvant venir coiffer la bande de roulement de ce pneumatique pour assurer le centrage latéral.

## Claims

1. Method for diagnosing the state of inflation of the tyres of an automobile vehicle in which a local deformation of each tyre is provoked by application thereto of an effort directed towards the interior of the tyre, and the stiffness of the spring that the tyre constitutes is measured in order to deduce therefrom the state of inflation thereof, characterized in that it comprises the steps consisting in:
- applying to the tyre a dynamic effort of very short duration,
- measuring the variation in time, with the aid of a force meter, of the effort resulting from the local deformation of the tyre,
- delivering an electric signal representing this effort,
- ensuring processing of the resulting electric signals from the various force meters by means of a microprocessor,
- displaying a signal indicating whether one or more tyres is/are under-inflated.

2. Device for diagnosing the state of inflation of the tyres of an automobile vehicle comprising for each tyre (1) a device (3) for excitation of this tyre (1) comprising means (6, 8) for locally applying to the tyre an effort provoking a deformation of this tyre, characterized in that the means (6, 8) are adapted to exert on the tyre (1) a dynamic effort of short duration, a force meter (7) measuring the variation, in time, of the effort resulting from the local deformation of the tyre (1) and delivering an electric signal representing this effort, a microprocessor (4) ensuring processing of the resulting electric signals from the various force meters, and a display device (5) emitting a signal indicating whether one or more tyres is/are under-inflated.

3. Device according to Claim 2, characterized in that the excitation device (3) comprises a hammer (6) equipped at its end with a force meter (7), this hammer (6) being mobile on an appropriate support so as to be able to strike any location of the tyre on its tread or its sidewall.

4. Device according to Claim 2, characterized in that the device for exciting the tyre (1) is constituted by a striker arm (8) comprising a cylindrical barrel (9) which is fixed to the end of an arm adjustable in height, so as to be able to be disposed radially in the immediate proximity of the tread of a tyre (1), the barrel (9) containing a mobile assembly (11) comprising a plastic connector (12) intended to strike the tread of the tyre (1), a force meter (7) and an additional mass (13), constituted by a block of steel and this mobile assembly (11) is propelled towards the tread of the tyre (1) by the rod (14) of a pneumatic jack connected to the barrel (8).

5. Device according to any one of Claims 2 to 4, characterized in that it constitutes an automatic bench for simultaneous measurement on the four wheels of a stopped vehicle, this measuring bench comprising four striker arms (8), distributed in pairs on two retractable carriages (16) which are placed on the ground on either side of the vehicle whose tyres are to be controlled.

6. Device according to Claim 5, characterized in that each carriage (16) comprises a longitudinal member (17) resting on the ground via idle wheels (18) and being able to be displaced by orientable motorization wheels (19), it bears on the same side, at the front and at the rear, two longitudinal rulers for lateral positioning, namely a front ruler (21) and a rear ruler (22) which are intended to abut on the sidewalls of the tyres (1), each of the lateral positioning rulers (21, 22) bearing a striker arm (8).

7. Device according to Claim 6, characterized in that the front lateral-positioning ruler (21) is articulated on the carriage (16) about a vertical axis (23).

8. Device according to either one of Claims 6 and 7, characterized in that each carriage (16) bears, at the front, a retractable hooking arm (24) which is articulated about a vertical axis (25).

9. Device according to either one of Claims 6 and 8, characterized in that each of the longitudinal, lateral-positioning rulers, front (21) and rear (22), bears a sleeve (26) mounted for longitudinal slide and fast with a horizontal transverse arm (27), on this arm (27) is slidably mounted a sleeve (28) with which the striker arm (8) is fast, the barrel (9) of this striker arm (8) being articulated on the horizontal, transverse arm (27) via the sleeve (28).

10. Device according to any one of Claims 6 to 9, characterized in that the barrel (9) of each striker arm (8) is fast with two upper (29) and lower (31) arms contained in the same vertical plane and forming a (V) open in the direction of the tyre, the two arms (29, 31) in V form bearing at their ends castors (32) intended to come into contact with the tread of the tyre (1), and the barrel (9) of the striker arm (8) is also fast with two other arms (33, 34) forming a V open in the direction of the tyre, contained in a plane passing through the axis of the barrel (9) and perpendicular to the vertical plane and being able to cover the tread of this tyre to ensure lateral centering.

## Patentansprüche

1. Verfahren zur Überwachung des Luftdruckes in Fahrzeugreifen, bei dem eine lokale Deformation jedes Reifens erzeugt wird durch Anwendung einer gegen das Innere des Reifens gerichteten Beanspruchung und bei dem die Steifigkeit des federnden Körpers, den der Reifen bildet, gemessen wird, um daraus dessen Druckzustand zu ermitteln, dadurch gekennzeichnet, daß es aus den Stufen besteht:
- Anwendung einer sehr kurzzeitigen dynamischen Beanspruchung auf den Reifen,
- Messen der zeitlichen Änderung der aus der lokalen Deformation des Reifens resultierenden Beanspruchung mittels eines Kraftaufnehmers
- Elektrische Signalgebung, die diese Beanspruchung wiedergibt,
- Verarbeitung der Daten der aus diversen Kraftaufnehmern resultierenden elektrischen Signale mit Hilfe eines Mikroprozessors,
- Anzeigen eines Signals, welches angibt, wenn ein oder mehrere Reifen Unterdruck aufweisen.

2. Vorrichtung zur Überwachung des Luftdrucks von Kraftfahrzeugreifen, die für jeden Reifen (1) eine Erregungsvorrichtung (3) dieses Reifens (1) aufweist, die Mittel (6,8) zur lokalen Anwendung einer Belastung auf den Reifen aufweist, welche zu einer Deformation dieses Reifens führen, dadurch gekennzeichnet, daß die Mittel (6,8) geeignet sind, auf den Reifen (1) eine dynamische Belastung kurzer Dauer auszuüben, wobei ein Kraftaufnehmer (7) die zeitliche Veränderung der aus der lokalen Deformation des Reifens (1) resultierenden Belastung mißt und ein diese Belastung wiedergebendes elektrisches Signal liefert, ein Mikroprozessor (4) die Daten der aus verschiedenen Kraftaufnehmern resultierenden elektrischen Signale verarbeitet, und eine Anzeigevorrichtung (5) ein Signal sendet, wenn ein oder mehrere Reifen Unterdruck aufweisen.

3. Vorrichtung nach Anspruch 2, dadurch gekennzeichnet, daß die Erregungsvorrichtung (3) einen an seinem Ende mit einem Kraftaufnehmer (7) bestückten Hammer (6) aufweist, wobei dieser Hammer (6) beweglich auf einem geeigneten Träger in der Weise angebracht ist, daß er auf eine beliebige Stelle des Reifens auf seiner Lauffläche oder seiner Seitenwand schlagen kann.

4. Vorrichtung nach Anspruch 2, dadurch gekennzeichnet, daß die Anregungsvorrichtung des Reifens (1) durch einen Schlagbolzen (8) gebildet wird, der ein zylindrisches Rohr (9) aufweist, das an dem Ende eines höhenverstellbaren Arms in der Weise befestigt ist, daß es radial in die unmittelbare Nähe der Lauffläche eines Reifens (1) verschoben werden kann, wobei das Rohr oder die Stange (9) eine bewegliche Einheit (11) enthält, die ein Ansatzstuck aus Kunststoff (12) umfasst, welches zum Schlagen auf die Lauffläche des Reifens (1) bestimmt ist, einen Kraftaufnehmer (7) und eine zusätzliche Masse (13), die durch einen Stahlblock gebildet wird, wobei diese mobile Einheit (11) gegen die Lauffläche des Reifens (1) durch die Stange (14) eines Druckluftzylinders getrieben wird, der mit der Stange (8) in Verbindung steht.

5. Vorrichtung nach einem der Ansprüche 2 bis 4, dadurch gekennzeichnet, daß sie einen automatischen Prüfstand zur gleichzeitigen Messung der vier Räder eines stehenden Fahrzeuges darstellt, wobei dieser Prüfstand (4) Schlagbolzen (8) aufweist, die paarweise auf zwei einziehbare Schlitten (16) verteilt sind, die zu beiden Seiten des Fahrzeuges, dessen Reifen zu kontrollieren sind, auf dem Boden plaziert sind.

6. Vorrichtung nach Anspruch 5, dadurch gekennzeichnet, daß jeder Schlitten (16) einen Träger (17) aufweist, der auf lose auf der Achse laufenden Räder (18) auf dem Boden ruht und durch verstellbare Motorisationsräder (19) umgesetzt werden kann, und der auf der gleichen Seite vorne und hinten zwei longitudinale Meßstangen zur seitlichen Positionierung trägt, nämlich eine vordere (21) und eine hintere (22) Meßstange, die dazu bestimmt sind, auf den Seitenwänden der Reifen (1) Halt zu finden, wobei jede der Meßstangen für die seitliche Positionierung (21,22) einen Schlagbolzen (8) trägt.

7. Vorrichtung nach Anspruch 6, dadurch gekennzeichnet, daß die vordere Meßstange (21) für die seitliche Positionierung auf dem Schlitten (16) um eine vertikale Achse (23) angeordnet ist.

8. Vorrichtung nach einem der Ansprüche 6 und 7, dadurch gekennzeichnet, daß jeder Schlitten (16) vorne einen einziehbaren Hakenarm (24) trägt, der um eine vertikale Achse (25) angeordnet ist.

9. Vorrichtung nach einem der Ansprüche 6 und 8, dadurch gekennzeichnet, daß jede der longitudinalen Meßstangen zur seitlichen Positionierung vorn (21) und hinten (22) eine Muffe (26) trägt, die auf einer Führung in Längsrichtung fest verbunden mit einem horizontalen und transversalen Arm (27) montiert ist, wobei auf diesen Arm (27) gleitend eine Muffe (28) sitzt, die fest verbunden ist mit dem Schlagbolzen (8), wobei das Rohr (9) dieses Schlagbolzens (8) auf dem horizontalen Querarm (27) mittels der Muffe (28) gelenkig verbunden ist.

10. Vorrichtung nach einem der Ansprüche 6 bis 9, dadurch gekennzeichnet, daß das Rohr (9) jedes Schlagbolzens (8) fest verbunden ist mit zwei Armen, einem oberen (29) und einem unteren (31), die in der gleichen vertikalen Ebene sich befinden und ein offenes (V) in Richtung des Reifens bilden, wobei die beiden Arme (29,31) in V-Formation an ihren Enden Rollen (32) tragen, die dazu bestimmt sind, mit der Lauffläche des Reifens (1) in Kontakt zu kommen, und wobei das Rohr (9) des Schlagbolzens (8) in gleicher Weise fest verbunden ist mit zwei anderen Armen (33,34), die ein offenes V in Richtung des Reifens bilden, welches in einer durch die Achse des Rohrs (9) verlaufenden Ebene sich befindet und senkrecht zur vertikalen Ebene steht und die Lauffläche dieses Reifens zur Gewährleistung der seitlichen Zentrierung abdecken kann.
